# EUROPEAN PATENT SPECIFICATION

(11) **EP 1 859 446 B1**
(45) Date of publication and mention of the grant of the patent: **20.05.2020**
(21) Application number: 06711024.7
(22) Date of filing: 06.03.2006
(51) Int. Cl.: G11B 27/10, G11B 27/34, G11B 27/32, H04N 5/93, G06F 3/14

(54) **METHOD AND DEVICE FOR DISPLAYING VIRTUAL OBJECTS**
VERFAHREN UND EINRICHTUNG ZUM ANZEIGEN VIRTUELLER OBJEKTE
PROCEDE ET DISPOSITIF PERMETTANT L'AFFICHAGE D'OBJETS VIRTUELS

(30) Priority: 10.03.2005 EP 05101851
(43) Date of publication of application: 28.11.2007
(73) Proprietor: Koninklijke Philips N.V., 5656 AG Eindhoven (NL)
(72) Inventor: MOLL, Hendrik, F., NL-5656 AA Eindhoven (NL); NEWTON, Philip, S., NL-5656 AA Eindhoven (NL)
(74) Representative: de Haan, Poul Erik
(86) International application number: PCT/IB2006/050688
(87) International publication number: WO 2006/095300

(56) References cited:
- EP-A1- 1 603 335
- WO-A-2004/025651
- WO-A-2004/068854
- WO-A-2004/074976
- WO-A-2004/107345
- WO-A-2005/002219
- WO-A1-2004/075547

## Description

The invention relates to a method of accessing virtual objects in stored information in a rendering system for displaying the stored information, which displaying includes providing the virtual objects, the stored information being arranged according to a first predefined format for rendering in a basic mode rendering device that provides a basic application mode according to the first predefined format, the first format comprising first format virtual objects to be displayed, the stored information being further arranged according to a second predefined format for rendering in an enhanced mode rendering device that provides an enhanced application mode according to the second predefined format, the second format comprising second format virtual objects to be displayed.

The invention further relates to a computer program product for accessing virtual objects in a rendering system for displaying stored information, which program is operative to cause a processor to perform the method.

The invention further relates to a device for rendering stored information, which device comprises read means for retrieving the stored information, and rendering means for generating a display signal for displaying the stored information and accessing virtual objects in the stored information, which displaying includes providing the virtual objects in at least one of an interactive user interface and a real-time information display.

The invention further relates to a storage medium carrying the stored information including virtual objects, which virtual objects are to be accessed in a rendering system for displaying the stored information, which displaying includes providing the virtual objects.

The invention relates to the field of providing interactive applications in a user device. The interactive applications may include rendering video, games, etc. Commonly such interactive applications are based on stored information according to a predefined format. In particular the invention relates to rendering data according to more than one rendering mode, i.e. at least a basic mode and an enhanced mode.

WO2004/025651 describes a rendering system, including a storage medium and reproducing method for rendering stored data of interactive applications on a display, for example menus in an interactive user interface or video in a real-time information display. A reading device, such as an optical disc player according to the BD-ROM format (Blu-Ray ROM standard), retrieves stored information, for example an audio/video (AV) stream including digitally compressed video data. The document describes reproducing data of different types including real-time information such as video and the corresponding control commands (called MOVIE object) and active data such as buttons. Real-time information is information to be rendered continuously, in particular information representing digitally encoded video according to a standardized format like MPEG2 or MPEG4. Active data is generated when rendered, such as dynamic graphic objects, animations or menus, and may allow interaction by a user, e.g. via buttons invoking commands.

In an enhanced mode scenario complex active data may be rendered, called Java Object or WebPage object. In a basic mode only real-time data and predefined interactive data such as menus is reproduced, while in an enhanced mode the same real-time data is reproduced, but also the complex active data. Parameters generated in the basic mode are stored in registers and may be used in the enhanced mode. Hence part of a MOVIE object may be rendered in the enhanced mode while applying settings based on the parameters generated in the basic mode.

The rendering system requires preparing the stored information, a process usually called authoring. During authoring active virtual objects, for example buttons and menus in the basic mode, are designed and stored according to a first predefined format. However, in the enhanced mode, the complex active elements require similar virtual objects, which are defined during a second authoring process and stored according to a second predefined format, e.g. in said WebPage. A problem of the known system is that such a dual authoring process requires substantial resources, as well as storage space on a medium.

It is an object of the invention to provide a rendering system which alleviates dual authoring.

For this purpose, according to a first aspect of the invention, the method of accessing virtual objects in stored information, as described in the opening paragraph, comprises the step of translating a subset of the stored information representing at least one of the first format virtual objects to a new subset of information for generating a simulated virtual object in the enhanced application mode.

For this purpose, according to a second aspect of the invention, the device as described in the opening paragraph comprises means for translating a subset of the stored information representing at least one of the first format virtual objects to a new subset of information for generating a simulated virtual object in the enhanced application mode.

For this purpose, according to a third aspect of the invention, the storage medium comprises stored information, which stored information comprises a subset representing at least one of the first format virtual objects to be translated to a new subset of information for generating a simulated virtual object in the enhanced application mode.

The measures have the effect that in the rendering system the stored information is reproducible in the basic mode, while displaying and executing active elements defined according to the first format. The active elements, called virtual objects, include elements for user interaction such as buttons or menus, and graphic elements, animations, etc. It is noted that the real-time data as such, e.g. video and audio streams, is not included in the virtual objects as defined here. In particular the invention allows sharing of the virtual objects in different rendering environments, i.e. virtual objects defined and formatted according to the requirements of the basic mode are made available in the enhanced mode. This has the advantage that the effort for dual authoring, i.e. providing and designing the stored information for each rendering mode, is substantially reduced as the same interactive elements are made accessible in both environments. For example a similar effect in both environments can be easily achieved because one active element from the basic mode can be re-used in the enhanced mode. Another advantage is that no extra effort is required to guarantee the same look and feel in both rendering modes when the same elements are used in both modes. Advantageously, the amount of storage space required on the medium is reduced because duplication of data in different formats is obviated.

The invention is also based on the following recognition. Reproducing the same real-time data in different application modes is known, e.g. from WO2004/025651 as discussed above. The document describes storing data according to different formats (e.g. MOVIE object and Java Object or WebPage object). The same real-time data may be reproduced in difference rendering modes. However, no stored data is shared for displaying and executing active elements. On the contrary, each rendering mode is defined and stored independently, and only parameter data is exchanged in runtime (i.e. when the rendering device is operated by the user) when modes are switched. Although sharing parameter data via registers enables mode switching while maintaining settings (e.g. a selected language), the approach does not at all facilitates dual authoring for creating a similar presentation and interactive functionality. It is to be noted that the authoring is executed before storing the information, while WO2004/025651 is only concerned with sharing data while reproducing, i.e. after storing the information. The inventors have seen that transferring runtime parameters between the modes results in limitations, whereas preparing the virtual objects in the authoring phase to be used in both the basic mode and in the enhanced mode, and providing said translating function in the enhanced device, allows re-use of stored information and design effort.

In an embodiment of the method said translating is made available in the enhanced application mode via an application program interface defined according to a predefined programming language. The application program interface (API) provides a standard interface for application programs to access assets or resources provided by other parts of the system. Advantageously various programs can access the virtual objects via the standardized API.

In an embodiment of the method said translating comprises providing an image access by providing images based on decoded image data from a decoder that is arranged for decoding the first format virtual objects in the basic application mode. This has the advantage that the decoder is required for the basic mode, and therefore is available in the device for reproducing stored information only being formatted according to the first format. Hence, when rendering stored information according to the second format in the enhanced mode, the image data is available without requiring additional processing.

In an embodiment of the method said translating comprises providing an interactive access by providing interactive objects and related state data relating to at least one interactive state of the interactive objects, in a particular case the objects being buttons and the state data comprising related commands. The state data embodies different operational states, e.g. shape or color, and actions defined for the virtual object in the basic mode. Advantageously, according to the intermediate access, such properties are transferred to the enhanced mode.

In an embodiment of the method said translating comprises providing a complex access by providing a mapping including synchronization information to the virtual objects in the enhanced application mode based on at least one of position data, button groups, menu pages, windows or animations from the basic application mode. The mapping provided according to the complex access facilitates flexible use of the virtual objects, which are defined for the first format, to be applied in the enhanced mode. For example, the position and timing information is made accessible, and may be used or adapted in the enhanced mode. This has the advantage that complex interactive display function such as games or educational functions may be based on the active elements that are stored and designed according to the basic format.

Further preferred embodiments of the device and method according to the invention are given in the appended claims, disclosure of which is incorporated herein by reference.

These and other aspects of the invention will be apparent from and elucidated further with reference to the embodiments described by way of example in the following description and with reference to the accompanying drawings, in which
Figure 1 shows a storage medium,
Figure 2 shows a rendering device,
Figure 3 shows a model of a rendering system having enhanced application modes,
Figure 4 shows a compatibility scheme for rendering devices,
Figure 5 shows an interactive graphics stream decoder model,
Figure 6 shows an interactive graphics stream decoder model including translation,
Figure 7 shows a sample program of a Java access program,
Figure 8 shows a model of interactive elements,
Figure 9 shows a model of interactive elements including interactive access.

Corresponding elements in different Figures have identical reference numerals.

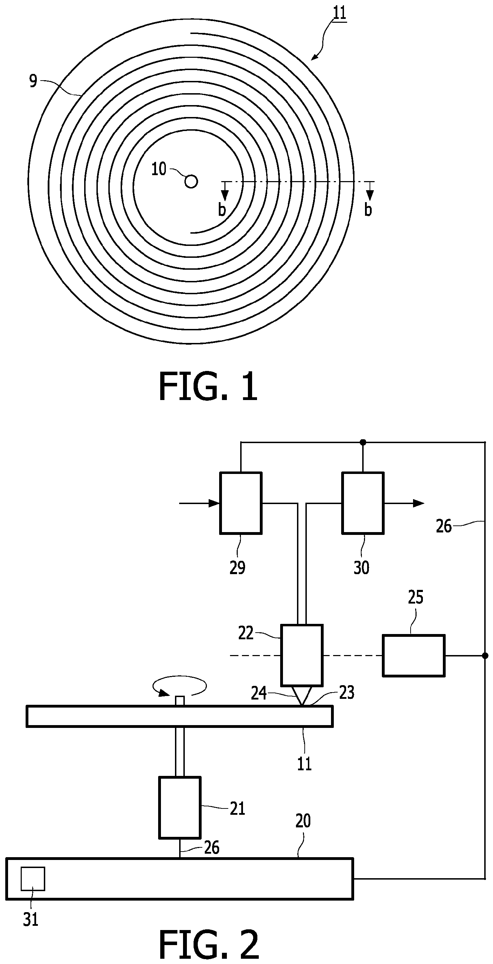

Figure 1 shows a disc-shaped record carrier 11 having a track 9 and a central hole 10. The track 9, being the position of the series of (to be) recorded marks representing information, is arranged in accordance with a spiral pattern of turns constituting substantially parallel tracks on an information layer. The record carrier may be optically readable, called an optical disc. Examples of an optical disc are the CD and DVD, and the high density optical disc using a blue laser, called Blu-ray Disc (BD). Further details about the DVD disc can be found in reference: *ECMA-267: 120 mm DVD* - *Read-Only Disc* - *(1997).* The information is represented on the information layer by optically detectable marks along the track.

The record carrier 11 is intended for carrying digital information in blocks under control of a file management system. The information includes real-time information to be reproduced continuously, in particular information representing digitally encoded video like MPEG2.

In new optical disk standards high definition video is combined with graphics and applications to create an interactive viewing experience, e.g. video may be combined with interactive applications to enhance the viewing experience. Typically these applications allow the user to control playback of the video content, get more information on the content being watched or give access to new services. For new services the user devices may have a communication interface for establishing a connection to a network such as the internet. Through this connection the application can, for example, provide e-commerce, gambling and information services on the TV.

The storage medium is carrying stored information according to a predefined data storage format, which format includes virtual objects such as buttons, graphic elements or animations. An example of the predefined data storage format is the Blu-ray Disc (BD), which defines storage of real-time data and active data.

According to the invention the stored information is arranged according to a basic format, e.g. BD-ROM version 1.0, for rendering in a basic mode rendering device that provides a basic application mode, e.g, a movie mode. The basic format defines basic format virtual objects to be displayed, e.g. buttons and menu items. The stored information further includes data arranged according to an enhanced format for rendering in an enhanced mode rendering device that provides an enhanced application mode including complex active data such as interactive objects and application programs, e.g. a fully interactive mode according to BD-ROM version 1.1. The enhanced format defines enhanced virtual objects to be displayed. The virtual objects are included during authoring, and are shared between the rendering modes as elucidated below. Further information on the BD-ROM formats may be found in the technical information, in particular called white papers, on the Blu-ray website www.blu-raydisc.com. Further information on interactive virtual objects in graphical user interfaces may, for example, be found in the DVB-MHP specification: Digital Video Broadcasting (DVB) - Multimedia Home Platform (MHP) Specification 1.0.2 (available from the ETSI website http://www.etsi.org).

Figure 2 shows a rendering device for reproducing real-time information and active information. The device has read means which include a head 22 for retrieving the stored information and scanning means for scanning a track of the record carrier 11 as described above. The scanning means include a drive unit 21 for rotating the record carrier 11, a positioning unit 25 for coarsely positioning the head 22 in the radial direction on the track, and a control unit 20. The head 22 comprises an optical system of a known type for generating a radiation beam 24 guided through optical elements focused to a radiation spot 23 on a track of the information layer of the record carrier. The radiation beam 24 is generated by a radiation source, e.g. a laser diode. The head further comprises (not shown) a focusing actuator for moving the focus of the radiation beam 24 along the optical axis of said beam and a tracking actuator for fine positioning the spot 23 in a radial direction on the center of the track.

The control unit 20 is connected via control lines 26, e.g. a system bus, to other units that are to be controlled. The control unit 20 comprises control circuitry, for example a microprocessor, a program memory and control gates, for performing the procedures and functions according to the invention as described below. The control unit 20 may also be implemented as a state machine in logic circuits.

For reading the radiation reflected by the information layer is detected by a detector of a usual type, e.g. a four-quadrant diode, in the head 22 for generating a read signal and further detector signals including a tracking error and a focusing error signal for controlling said tracking and focusing actuators. The read signal is processed by a rendering unit 30 for rendering the stored information and generating a display signal for displaying the stored information and accessing virtual objects in the stored information on a display like a monitor or TV set. The displaying includes displaying and executing the virtual objects, for example buttons invoking commands in an interactive user interface or animations during reproducing real-time information.

According to the invention the device has a translation unit 31 for translating a subset of the stored information representing a first format virtual object to a new subset of information for generating a simulated virtual object in the enhanced application mode. The translation unit 31 may be implemented as a software function in the control unit 20, as part of the rendering unit 30, or as a separate unit.

The device may be arranged for writing information on a record carrier 11 of a type which is writable or re-writable, for example DVD+RW or BD-RW. The device comprises a write unit 29 for processing the input information to generate a write signal to drive the head 22.

In an embodiment of the rendering system the rendering device retrieves the stored data from a remote source. The rendering device at the user location may be connectable via a network to a server. The user device, for example a set top box (STB), has a receiver for receiving broadcast data such as video. The user device has a network interface, e.g. a modem, for connecting the device to a network, e.g. the internet. A server also has a network interface for connecting the server device to the network. It is noted that user devices that are connectible to a network also include multimedia devices (e.g. a standardized multimedia home platform MHP), enhanced mobile phones, personal digital assistants, etc.

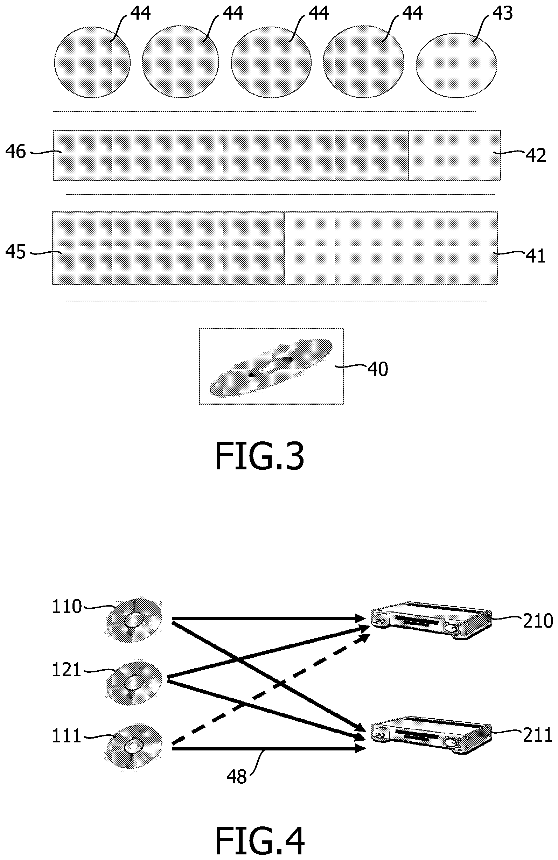

Figure 3 shows a model of a rendering system having enhanced application modes. A storage medium 40, e.g. a BD-ROM, is shown at the bottom of the model. As shown on the second level of the model, real-time information 41, like digital AV data, and complex active elements 45, like Java Virtual Machine supporting Internet Access and WEB Format, are retrieved. As shown on the third level of the model, a basic application mode 42, e.g. HD movie view, and an enhanced application mode 46, e.g. Enhanced Interactive View and Browser View, are supported and based on the data of the second level. Finally, on the top level of the model, the user experiences a basic rendering application 43, e.g. HD Movies, and enhanced applications 44, like Games, Edutainment, Electronic Publishing, Web Service, etc. based on Java applications.

The basic application for BD-ROM will be High Definition Movie (HDMV) according to a basic version of the standard. However also enhanced modes like web-connectivity and interactivity such as games will be part of the enhanced BD-ROM standard. Figure 3 shows the conceptual model of the enhanced logical format for BD-ROM V1.1. As shown in figure 3, Java will be the enabling technology for the interactivity. The BD-player will contain a Java Virtual machine with additional Application Program Interfaces (API) for controlling the A/V playback of the disc. The content author can include Java applications on the disc that allow a user to play games, access the Internet, but also to show a menu or to control the basic playback of the movie. BD-ROM 1.1 is an enhanced version of BD-ROM 1.0 basic format, which has the same A/V playback features, but lacks all the Java features. It only supports HDMV with a DVD-like menu scheme. A requirement of a BD-ROM 1.1 disc is that it can be played back in a BD-ROM 1.0 player.

Figure 4 shows a compatibility scheme for rendering modes. A first rendering device 210 accommodates basic mode rendering of stored information according to BD-ROM version 1.0. A second rendering device 211 accommodates enhanced mode rendering of stored information according to BD-ROM version 1.1. A first storage medium 110 has basic movie mode stored information according to BD-ROM version 1.0. A second storage medium 111 has full mode stored information according to BD-ROM version 1.1, while a third storage medium 121 has dual authored stored information according to BD-ROM version 1.0 and 1.1. The arrows 48 indicate the rendering options of the storage mediums in the rendering devices. Note that a consumer using the full mode disc 111 in the basic mode device 210 has no access to enhanced features, whereas the basic mode disc can be rendered in any device. Discs have to have two application modes to make optimal use of both 1.0 and 1.1 features. In particular the dual authored disc 121 has been prepared for use in both modes by providing virtual objects in the basic mode that are shareable in the full mode as explained below.

It is noted that, without sharing the virtual objects, a problem with the compatibility is that it will add substantial extra costs to the development of 1.1 content. Another problem is that images and sounds used in HDMV and in Java are not guaranteed to be the same. The "look and feel" of one disc can differ from player to player. A practical problem is that Java applications cannot directly use images and sounds that do not fit Java file size requirements, e.g. fit within a certain maximum size JAR file.

The above problems are solved by defining of a (new, standard) API in the BD-ROM 1.1 Java profile that gives Java access to the active assets created for the ROM 1.0 HDMV application. The access from Java to HDMV active virtual objects reduces dual authoring costs and guarantees the same look and feel between Java and HDMV use of one disc. Additionally, the API may provide access for Java applications to unbounded sets of images since the HDMV real-time information comes from a MPEG-2 transport-stream and not from a size limited JAR file.

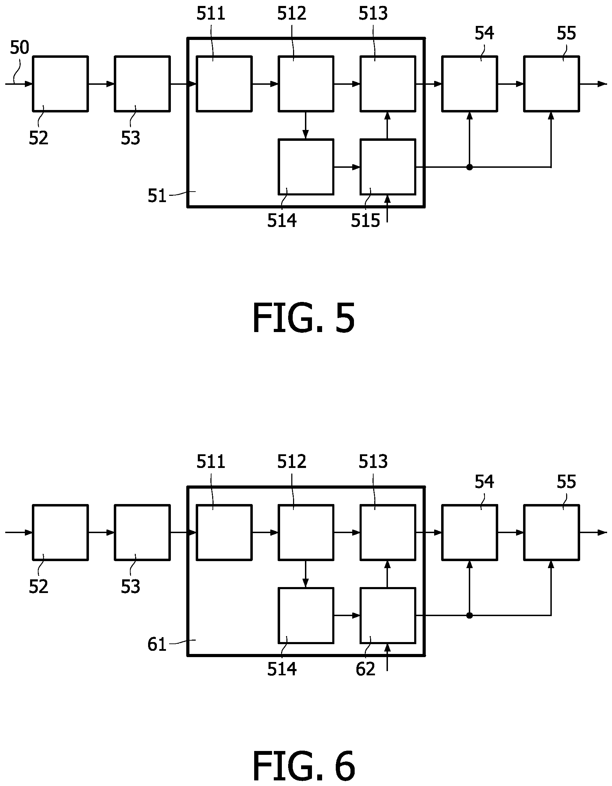

In various embodiments Java access to HDMV assets is provided at a number of different levels with increasing complexity. The access is provided via translating the stored virtual objects to enhanced mode object, for example via an API. Details are shown and described with Figures 5 and 6.

In a first embodiment image access is provided. Here the translating includes providing an image access by providing images based on decoded image data from a decoder that is arranged for decoding the basic format virtual objects in the basic application mode. Images in a decoded object buffer of the Interactive Graphics Decoder (required in basic mode) can be retrieved as a list of Java images that the Java application can use for it's own drawing functionality (in the enhanced mode).

In a second embodiment interactive access is provided. Here the translating includes providing a interactive access by providing interactive objects and related state data relating to at least one interactive state of the interactive objects. The objects may be buttons and the state data may include related commands to be executed. The set of HDMV buttons can be retrieved as a set of Java with the same states, for example including re-use of HDMV cropping data. Note that a HDMV button may contain a set of objects, one for each state, and may include commands to be invoked in various states. Alternatively to Java, HAVI HGraphicButtons may be defined (HAVI = Home Audio Video Interface as defined in the DVB-MHP specification, see e.g. L2 UI = Layer 2 User Interface; also HAVI L2 UI may be included as part of BD-ROM 1.1). Note that both HDMV and HAVI support remote control key based navigation with left/right/up/down movements and an OK/cancel button.

In a third embodiment complex access is provided. Here the translating includes providing the complex access by providing a mapping including synchronization information to the virtual objects in the enhanced application mode based on at least one of position data, button groups, menu pages, windows or animations from the basic application mode. A mapping may include position, size, shape, color and timing information. Now complex virtual objects are made available, such as mappings for both HDMV button groups, windows and animations and position data.

Finally, for HDMV Audio samples a translation of format may be provided. Here the translating includes providing sound objects included in the virtual objects in the enhanced application mode based on sound data from the basic format virtual objects in the basic application mode. For example the HDMV sound.bdmv file can be made accessible as an array of Java Sounds.

For controlling some types of virtual object an additional control API may be needed, e.g. for controlling the updates of the interactive graphics objects in Java mode. In HDMV this is done through "Composition States" based on Epochs and Acquisition Points. This API could provide turning acquisition on and off with the effect of clearing the object buffer and decoding the set of assets of the next epoch in the stream. The decoding in turn is controlled through Java's media framework (JMF) and selection of the appropriate elementary streams.

Figure 5 shows an interactive graphics stream decoder model. The Figure is taken from the BD-ROM 1.0 specification and illustrates the way "Objects" in the Interactive Graphics "Objects" stream are decoded. At the input 50 data that has been retrieved, such as MPEG2 Transport Stream (TS) packets, is provided to a PID Filter 52 and temporarily stored in a Transport Buffer 53 and subsequently coupled to an interactive graphic decoder 51. The decoder 51 comprises a Coded Data Buffer 511 coupled to a Stream Graphics Processor 512 which stores decoded data in a decoded object buffer 513, under control of a composition buffer 514 and a graphics controller 515, which has an input for user parameters and settings. The decoded data is coupled to a graphics plane unit 54, and finally to a color unit 55 containing a Color Lookup Table (CLUT).

It is noted that in BD-ROM HDMV run-length encoded images can be contained in MPEG-2 transport streams. These images are called Interactive Graphics "Objects" and are part of the IG (Interactive Graphics) elementary stream within the MPEG-2 TS. These "objects" live during so-called Epochs - point in the timeline of the MPEG-2 TS, indicated by Presentation Time Stamps (PTS). The Graphics Controller 515 takes care of drawing the compositions of decoded objects with the correct CLUT on the graphics plane.

In the enhanced mode, when a Java application is running, the Graphics Controller 515 cannot be active at the same time according to the BD-ROM specification.

Figure 6 shows an interactive graphics stream decoder model including translation. The Figure shows a modified decoder including an API 62 providing translation of the virtual objects for image access. Note that the Graphics Controller 515 is replaced by the API 62, for example implemented as a Java library that gives Java application access to the virtual objects as Java images that can be drawn on the graphics plane unit 54 by using Java graphics calls. Note that the IG data in the TS are filtered and decoded using the units provided for the basic mode according to Figure 5.

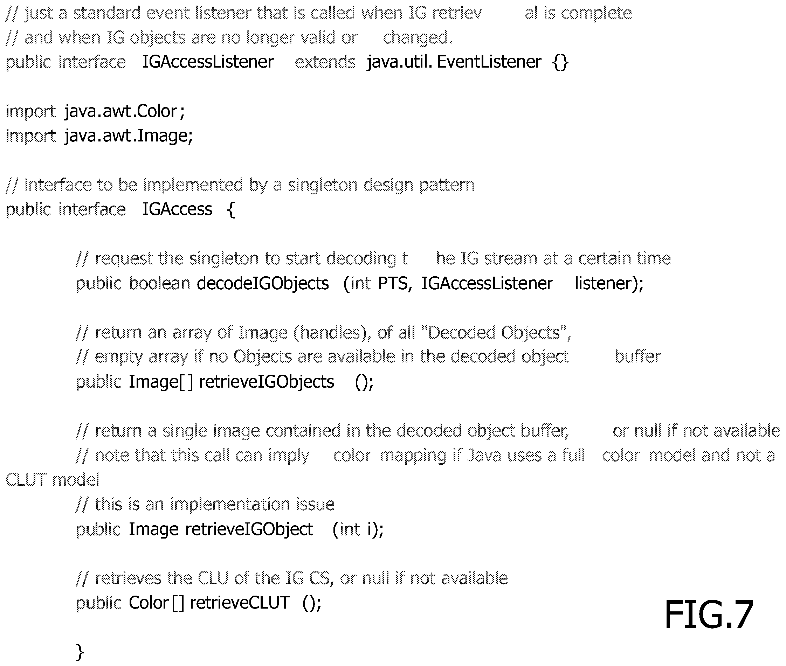

Figure 7 shows a sample program of a Java access program. The program defines classes and interfaces of the Java Interactive Graphics Access package for image access. Note that the sample program code is illustrative; names of methods can change, additional parameters can be added. However it does show the main idea of basic level access. Semantics of the methods in the sample program IGAccess take into account the HDMV concepts of Interactive composition segments (ICS) with "Epoch start" states, Acquisition Point Display Set and PTS based validity of the IG objects. It will also take care of CLUT updates and Object updates during an Epoch, just as in basic mode HDMV. The solution offers both benefits: less dual authoring, and, in the enhanced mode, a same look and feel and access to unlimited sets of images.

For implementing the interactive access, e.g. access to a set of HDMV buttons as explained above, additional interactive data is translated from the basic mode to the enhanced mode. The mechanism may use the HDMV IG Compositions system, in which buttons can be created according to a model of interactive elements.

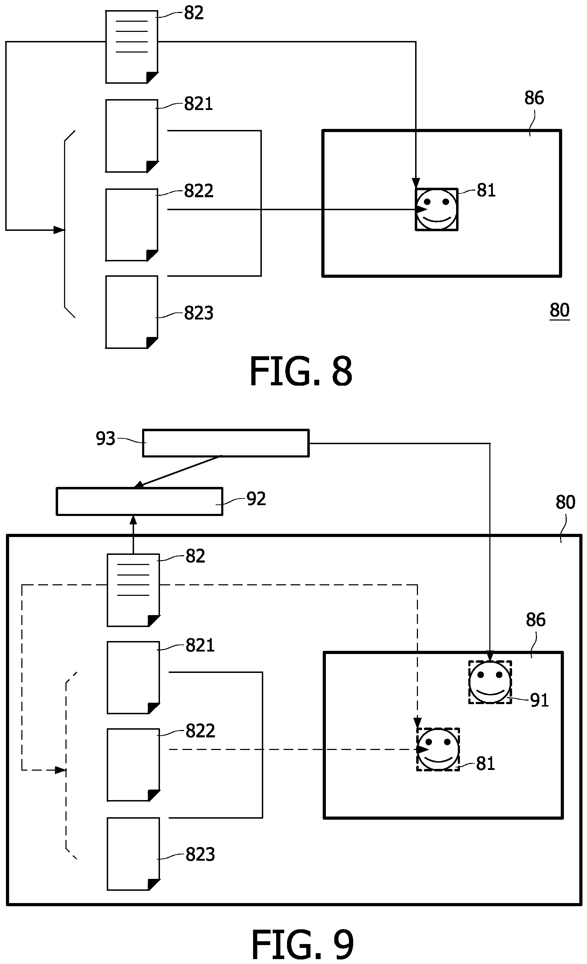

Figure 8 shows a model of interactive elements. The model describes the graphics system 80 available in the basic mode for generating buttons. A graphic plane 86 has a button 81 that is displayed and may be activated by a user. The button 81 is based in an interactive object 82 called interactive composition. The interactive composition contains a number of virtual objects: normal state object 821, selected state object 822 and activated state object 823. The translation of the interactive objects provides interactive access as discussed above.

Figure 9 shows a model of interactive elements including interactive access. The graphics system 80 available in the basic mode for generating buttons is taken from Figure 8. For providing the interactive access a translation of the button objects is provided by a so-called button factory 92. The button factory 92 is made accessible for Java application calls 93 via the API. As a result of a Java application call a further similar button 91 is created in the enhanced mode and shown on the graphics plane 86.

The button factory 92 uses the basic mechanism 80 shown above, and creates HGraphicButtons for each IG button contained in the IG Composition. Similar to the API above the button factory 92 can be activated for a certain PTS and the set of buttons that can be retrieved remains valid until the end of the Epoch.

A Java application can use the button factory 92 for creating the button 91. The button uses the same assets as the buttons in HDMV, but control over e.g. position is taken over by the application. If a complete set of buttons is retrieved, also the navigation commands can be included and retrieved later with the HGraphicButton.getMove() method. If a single button is retrieved the Java application is responsible for this itself. It can use HgraphicButton.setMove() calls to achieve this.

The interactive access approach gives even benefits beyond the basic access, for example buttons (with several states) can be re-used, and navigation between buttons can be re-used.

For implementing the complex access a mapping unit is required. The mapping unit translates synchronization information of various active graphical elements included in the virtual objects to similar data for the enhanced application mode. The mapping unit also provides position data, size, shape, color and timing information, and further includes the basic and interactive access information indicated above. Via the mapping unit button groups, menu pages, windows or animations from the basic application mode can be re-used in the enhanced mode.

It is noted that the translation unit 31 that provides the application program interface (API) as described above, may be provided in a computer program product for executing in a user device. The program is operative to cause a processor of the standard user device, e.g. a laptop computer, to perform the steps of retrieving the virtual object data, and generating, retrieving or reformatting the virtual object data from the stored information according to the basic mode. Furthermore, the processing of the virtual object data may include standard functions from libraries, e.g. as provided by the well-known Java programming environment. The translation and original virtual object data are hidden for other applications by providing the API according to a predefined standard. The new API may be using, or even replacing, an existing predefined API for accessing virtual objects. Other applications may use the new API without even knowing that the virtual objects are translated from a basic mode. The program may be distributed as a software plug-in, for example via internet, on a record carrier, or send via the broadcast together with any other applications and audio/video content. When loaded the program provides the API to other applications so these access the virtual objects. The API makes sure that the object data is presented to the respective application in the format of that application.

Although the invention has been explained mainly by embodiments based on Java other programming languages may be applied also. It is noted, that in this document the word 'comprising' does not exclude the presence of other elements or steps than those listed and the word 'a' or 'an' preceding an element does not exclude the presence of a plurality of such elements, that any reference signs do not limit the scope of the claims, that the invention may be implemented by means of both hardware and software, and that several 'means' may be represented by the same item of hardware.

## Claims

1. Method of making accessible interactive graphical elements for user interaction in stored information in a rendering system for displaying the stored information, which displaying includes displaying the interactive graphical elements,
the stored information being arranged according to a first predefined format for rendering in a basic mode rendering device that provides a basic application mode (42) according to the first predefined format, the first format comprising first format interactive graphical elements to be displayed,
the stored information being further arranged according to a second predefined format for rendering in an enhanced mode rendering device that provides an enhanced application mode (46) according to the second predefined format for executing application programs, the second format comprising second format interactive graphical elements to be displayed, which method comprises the step of
- translating a subset of the stored information representing at least one of the first format interactive graphical elements to a new subset of information for displaying a simulated interactive graphical element in the enhanced application mode, and
- making available an application program interface (API) for the application programs to access the new subset of information, the API defined according to a predefined programming language.

2. Method as claimed in claim 1, wherein the predefined programming language is the programming language JAVA.

3. Method as claimed in claim 1, wherein said translating comprises providing an image access by providing images based on decoded image data from a decoder that is arranged for decoding the first format graphical elements in the basic application mode.

4. Method as claimed in claim 1, wherein said translating comprises providing sound elements included in the interactive graphical elements in the enhanced application mode based on sound data from the first format interactive graphical elements in the basic application mode.

5. Computer program product for making accessible interactive graphical elements for user interaction in a rendering system for displaying stored information, which program is operative to cause a processor to perform the method as claimed in any of the claims 1 to 4.

6. Device for rendering stored information, which device comprises
- read means (22) for retrieving the stored information,
- rendering means (30) for generating a display signal for displaying the stored information and accessing interactive graphical elements for user interaction in the stored information, which displaying includes displaying the interactive graphical elements,
the stored information being arranged according to a first predefined format for rendering in a basic mode rendering device that provides a basic application mode according to the first predefined format, the first format comprising first format interactive graphical elements to be displayed,
the stored information being further arranged according to a second predefined format for rendering in an enhanced mode rendering device that provides an enhanced application mode according to the second predefined format for executing application programs, the second format comprising second format interactive graphical elements to be displayed, and
- translation means (31) for translating a subset of the stored information representing at least one of the first format interactive graphical elements to a new subset of information for displaying a simulated interactive graphical element in the enhanced application mode, and
- an application program interface (API) for the application programs to access the new subset of information, the API defined according to a predefined programming language.

## Patentansprüche

1. Verfahren zum Zugänglich machen von interaktiven grafischen Elementen für die Benutzerinteraktion in gespeicherten Informationen in einem Rendering-System zum Anzeigen der gespeicherten Informationen, wobei das Anzeigen das Anzeigen der interaktiven grafischen Elemente enthält,
wobei die gespeicherten Informationen gemäß einem ersten vordefinierten Format zum Rendern in einer Rendering-Einrichtung im Basismodus angeordnet sind, die einen Basisanwendungsmodus (42) gemäß dem ersten vordefinierten Format bereitstellt, wobei das erste Format interaktive grafische Elemente des ersten Formats umfasst, die angezeigt werden sollen,
wobei die gespeicherten Informationen zudem gemäß einem zweiten vordefinierten Format zum Rendern in einer Rendering-Einrichtung im erweiterten Modus angeordnet sind, die einen erweiterten Anwendungsmodus (46) gemäß dem zweiten vordefinierten Format zum Ausführen von Anwendungsprogrammen bereitstellt, wobei das zweite Format interaktive grafische Elemente des zweiten Formats umfasst, die angezeigt werden sollen, welches Verfahren den Schritt umfasst
- Verschieben einer Teilmenge der gespeicherten Informationen, die mindestens eines der interaktiven grafischen Elemente des ersten Formats darstellen, in eine neue Teilmenge von Informationen zum Anzeigen eines simulierten interaktiven grafischen Elements im erweiterten Anwendungsmodus, und
- Zur Verfügung stellen einer Anwendungsprogrammschnittstelle (API), damit die Anwendungsprogramme auf die neue Teilmenge von Informationen zugreifen, wobei die API gemäß einer vordefinierten Programmiersprache definiert wird.

2. Verfahren nach Anspruch 1, wobei die vordefinierte Programmiersprache die Programmiersprache JAVA ist.

3. Verfahren nach Anspruch 1, wobei das Verschieben das Bereitstellen eines Bildzugriffs durch Bereitstellen von Bildern basierend auf decodierten Bilddaten aus einem Decodierer umfasst, der zum Decodieren der grafischen Elemente des ersten Formats im Basisanwendungsmodus angeordnet ist.

4. Verfahren nach Anspruch 1, wobei das Verschieben das Bereitstellen von Tonelementen umfasst, die in den interaktiven grafischen Elementen im erweiterten Anwendungsmodus basierend auf Tondaten aus den interaktiven grafischen Elementen des ersten Formats im Basisanwendungsmodus enthalten sind.

5. Computerprogrammprodukt zum Zugänglich machen von interaktiven grafischen Elementen für die Benutzerinteraktion in einem Rendering-System zum Anzeigen gespeicherter Informationen, wobei dieses Programm betriebswirksam ist, damit ein Prozessor das Verfahren nach einem der Ansprüche 1 bis 4 ausführt.

6. Einrichtung zum Rendern gespeicherter Informationen, welche Einrichtung umfasst
- Lesemittel (22) zum Abrufen der gespeicherten Informationen,
- Rendering-Mittel (30) zum Erzeugen eines Anzeigesignals zum Anzeigen gespeicherter Informationen und zum Zugreifen auf interaktive grafische Elemente zur Benutzerinteraktion in den gespeicherten Informationen, wobei das Anzeigen das Anzeigen der interaktiven grafischen Elemente enthält,
wobei die gespeicherten Informationen gemäß einem ersten vordefinierten Format zum Rendern in einer Rendering-Einrichtung im Basismodus angeordnet sind, die einen Basisanwendungsmodus gemäß dem ersten vordefinierten Format bereitstellt, wobei das erste Format interaktive grafische Elemente des ersten Formats umfasst, die angezeigt werden sollen,
wobei die gespeicherten Informationen gemäß einem zweiten vordefinierten Format zum Rendern in einer Rendering-Einrichtung im erweiterten Modus angeordnet sind, die einen erweiterten Anwendungsmodus gemäß dem zweiten vordefinierten Format zum Ausführen von Anwendungsprogrammen bereitstellt, wobei das zweite Format interaktive grafische Elemente des zweiten Formats umfasst, die angezeigt werden sollen, und
- Verschiebungsmittel (31) zum Verschieben einer Teilmenge der gespeicherten Informationen, die mindestens eines der interaktiven grafischen Elemente des ersten Formats darstellen, in eine neue Teilmenge von Informationen zum Anzeigen eines simulierten interaktiven grafischen Elements im erweiterten Anwendungsmodus und
- eine Anwendungsprogrammschnittstelle (API), damit die Anwendungsprogramme auf die neue Teilmenge von Informationen zugreifen, wobei die API gemäß einer vordefinierten Programmiersprache definiert wird.

## Revendications

1. Procédé pour rendre accessibles des éléments graphiques interactifs pour l'interaction de l'utilisateur dans des informations stockées dans un système de rendu pour afficher des informations stockées, ledit affichage incluant l'affichage des éléments graphiques interactifs,
les informations stockées étant disposées selon un premier format prédéfini pour le rendu dans un dispositif de rendu en mode de base fournissant un mode d'application de base (42) selon le premier format prédéfini, le premier format comprenant des éléments graphiques interactifs du premier format à afficher,
les informations stockées étant de plus disposées selon un second format prédéfini pour le rendu dans un dispositif de rendu en mode amélioré fournissant un mode d'application (46) amélioré selon le second format prédéfini permettant l'exécution de programmations d'application, le second format comprenant des éléments graphiques interactifs du second format à afficher, ledit procédé comprenant l'étape de
- traduire un sous-ensemble des informations stockées représentant au moins un des éléments graphiques interactifs du premier format en un nouveau sous-ensemble d'informations permettant d'afficher un élément graphique interactif simulé dans le mode d'application amélioré, et
- mettre à disposition une interface de programmation d'applications (API) permettant aux programmations d'application d'accéder au nouveau sous-ensemble d'informations, l'API étant définie selon un langage de programmation prédéfini.

2. Procédé selon la revendication 1, dans lequel le langage de programmation prédéfini est le langage de programmation JAVA.

3. Procédé selon la revendication 1, dans lequel ladite traduction comprend la fourniture d'un accès à l'image en fournissant des images basées sur des données d'image décodées provenant d'un décodeur étant disposé pour décoder les éléments graphiques du premier format dans le mode d'application de base.

4. Procédé selon la revendication 1, dans lequel ladite traduction comprend la fourniture d'éléments sonores inclus dans les éléments graphiques interactifs dans le mode d'application amélioré sur la base de données sonores provenant des éléments graphiques interactifs du premier format dans le mode d'application de base.

5. Produit de programme informatique permettant de rendre accessibles des éléments graphiques interactifs pour l'interaction de l'utilisateur dans un système de rendu pour afficher des informations stockées, ledit programme étant opérationnel pour permettre à un processeur d'exécuter le procédé selon l'une quelconque des revendications 1 à 4.

6. Dispositif permettant le rendu d'informations stockées, ledit dispositif comprenant
- des moyens de lecture (22) servant à récupérer les informations stockées,
- des moyens de rendu (30) servant à générer un signal d'affichage pour afficher des informations stockées et accéder à des éléments graphiques interactifs pour l'interaction de l'utilisateur dans les informations stockées, ledit affichage incluant l'affichage des éléments graphiques interactifs,
les informations stockées étant disposées selon un premier format prédéfini pour le rendu dans un dispositif de rendu en mode de base fournissant un mode d'application de base selon le premier format prédéfini, le premier format comprenant des éléments graphiques interactifs du premier format à afficher,
les informations stockées étant de plus disposées selon un second format prédéfini pour le rendu dans un dispositif de rendu en mode amélioré fournissant un mode d'application amélioré selon le second format prédéfini pour exécuter des programmations d'application, le second format comprenant des éléments graphiques interactifs du second format à afficher, et
- des moyens de traduction (31) permettant de traduire un sous-ensemble des informations stockées représentant au moins un des éléments graphiques interactifs du premier format en un nouveau sous-ensemble d'informations permettant d'afficher un élément graphique interactif simulé dans le mode d'application amélioré, et
- une interface de programmation d'applications (API) permettant aux programmations d'application d'accéder au nouveau sous-ensemble d'informations, l'API étant définie selon un langage de programmation prédéfini.
